# EUROPEAN PATENT APPLICATION

(11) **EP 4 772 591 A1**
(43) Date of publication of application: **08.07.2026**
(21) Application number: 24859862.5
(22) Date of filing: 28.08.2024
(51) Int. Cl.: C09J 7/38, C09J 7/26, C09J 7/29, C09J 11/06, C09J 125/08, C09J 125/10, C09K 3/10

(54) **PRESSURE-SENSITIVE ADHESIVE SHEET, SEALING MATERIAL, AND SEAL STRUCTURE**

(30) Priority: 31.08.2023 JP 2023141536; 12.01.2024 JP 2024003312
(71) Applicant: Nitto Denko Corporation, Osaka 567-8680 (JP)
(72) Inventor: KAMAYA, Yusuke, 567-8680 Osaka (JP); UKEI, Hiroichi, 567-8680 Osaka (JP); IWASE, Takayuki, 567-8680 Osaka (JP); SUZUKI, Hideyuki, 567-8680 Osaka (JP)
(74) Representative: Müller-Boré & Partner Patentanwälte PartG mbB
(86) International application number: PCT/JP2024/030827
(87) International publication number: WO 2025/047833

(57) **Abstract**

A material of a pressure-sensitive adhesive sheet 10 has a first dynamic shear storage modulus G'₀ higher than 1.0 × 10⁶ Pa and a second dynamic shear storage modulus G'₅₀ lower than 1.0 × 10⁶ [Pa]. The first dynamic shear storage modulus G'₀ is a dynamic shear storage modulus (G') of the material of the pressure-sensitive adhesive sheet 10 at 1 Hz and 0°C. The second dynamic shear storage modulus G'₅₀ is a dynamic shear storage modulus (G') of the material of the pressure-sensitive adhesive sheet 10 at 1 Hz and 0°C.

## Description

### TECHNICAL FIELD

The present invention relates to a pressure-sensitive adhesive sheet, a sealing member, and a sealing structure.

### BACKGROUND ART

Sealing members including a pressure-sensitive adhesive sheet have been conventionally known.

For example, Patent Literature 1 describes a watertight sealing member in which a layer of a predetermined pressure-sensitive adhesive composition is on at least one face of a foamed structure having closed cells. The layer contains a polymer having a predetermined polycarbonate structure. This watertight sealing member has no tack, and accordingly the watertight sealing member does not adhere immediately. After installation, the watertight sealing member gradually adheres to an adherend due to the restoring force of the foamed structure, enhancing the sealing performance between the surface of the foamed structure and the interface of the adherend. A watertight test is conducted on a specimen of the watertight sealing member sandwiched between two acrylic plates.

On the other hand, pressure-sensitive adhesive sheets are known for which peeling off after adhering to an adherend is contemplated. For example, Patent Literature 2 describes a pressure-sensitive adhesive strip detachable by extensive stretching substantially on a bonding surface without leaving a residue or causing damage. This pressure-sensitive adhesive strip includes at least one adhesive layer foamed with microballoons and at least one carrier B. A pressure-sensitive adhesive A forming the adhesive layer includes an elastomer portion (a1) containing at least one polyvinylaromatic-polydiene block copolymer as a base and a predetermined pressure-sensitive adhesive resin portion (a2). The pressure-sensitive adhesive A optionally includes a plasticizing resin portion (a3).

### CITATION LIST

### Patent Literature

Patent Literature 1: JP H10-77463 A
Patent Literature 2: JP 2018-138649 A

### SUMMARY OF INVENTION

### Technical Problem

The descriptions in Patent Literatures 1 and 2 do not contemplate use of a sealing member under conditions in which both adhesion of the sealing member to a rough surface and high-speed peeling of the sealing member are required.

In view of this, the present invention provides a pressure-sensitive adhesive sheet that is advantageous in terms of adhesion of a sealing member to a rough surface and high-speed peeling of the sealing member.

### Solution to Problem

The present invention provides a pressure-sensitive adhesive sheet, wherein
a first dynamic shear storage modulus (G') is higher than 1.0 × 10⁶ Pa, the first dynamic shear storage modulus (G') being a dynamic shear storage modulus (G') of a material of the pressure-sensitive adhesive sheet at 1 Hz and 0°C, and
a second dynamic shear storage modulus (G') is lower than 1.0 × 10⁶ Pa, the second dynamic shear storage modulus (G') being a dynamic shear storage modulus (G') of the material at 1 Hz and 50°C.

The present invention further provides a sealing member including:
the pressure-sensitive adhesive sheet; and
a first layer covered with the pressure-sensitive adhesive sheet.

The present invention further provides a sealing structure including:
a first member;
a second member; and
the sealing member, wherein
the sealing member seals a gap between the first member and the second member.

### Advantageous Effects of Invention

The above pressure-sensitive adhesive sheet is advantageous in terms of adhesion of a sealing member to a rough surface and high-speed peeling of the sealing member.

### BRIEF DESCRIPTION OF DRAWINGS

FIG. 1 is a cross-sectional view schematically showing an example of the pressure-sensitive adhesive sheet according to the present invention.
FIG. 2 is a graph showing the relationship between the dynamic shear storage modulus (G') of a material of the pressure-sensitive adhesive sheet and temperature.
FIG. 3 is a cross-sectional view schematically showing an example of the sealing member according to the present invention.
FIG. 4 is a cross-sectional view schematically showing another example of the sealing member according to the present invention.
FIG. 5 is a cross-sectional view schematically showing an example of the sealing structure according to the present invention.

### DESCRIPTION OF EMBODIMENTS

Embodiments of the present invention will be described with reference to the drawings. The present invention is not limited to the following embodiments.

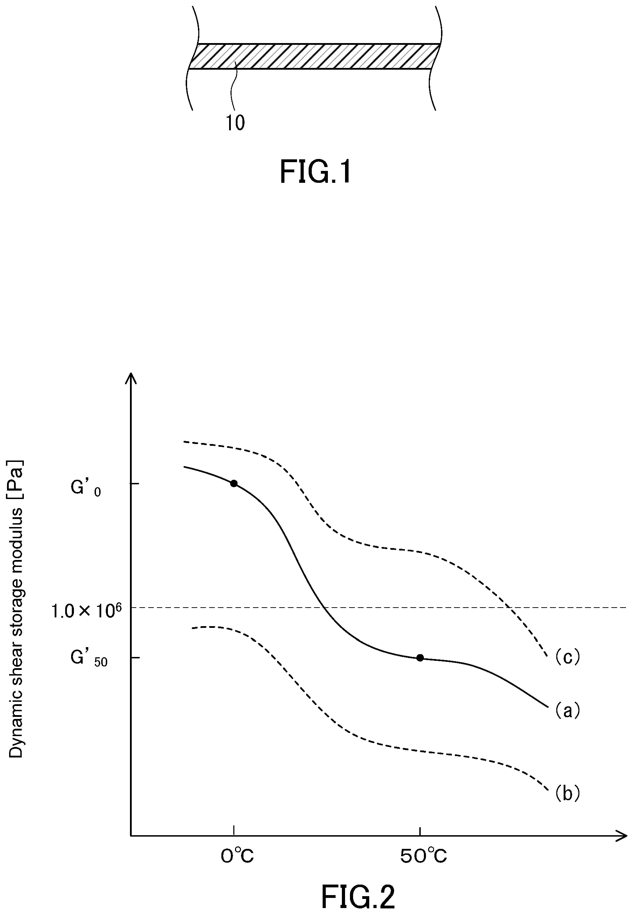

FIG. 1 is a cross-sectional view schematically showing an example of the pressure-sensitive adhesive sheet according to the present invention. A pressure-sensitive adhesive sheet 10 shown in FIG. 1 is formed of a predetermined material. FIG. 2 shows the relationship between the dynamic shear storage modulus (G') of the material of the pressure-sensitive adhesive sheet 10 and temperature. As shown in the graph of FIG. 2(a), the material of the pressure-sensitive adhesive sheet 10 has a first dynamic shear storage modulus G'₀ higher than 1.0 × 10⁶ Pa and a second dynamic shear storage modulus G'₅₀ lower than 1.0 × 10⁶ [Pa]. The first dynamic shear storage modulus G'₀ is the dynamic shear storage modulus (G') of the material of the pressure-sensitive adhesive sheet 10 at 1 Hz and 0°C. The second dynamic shear storage modulus G'₅₀ is the dynamic shear storage modulus (G') of the material of the pressure-sensitive adhesive sheet 10 at 1 Hz and 0°C.

When a sealing member including a pressure-sensitive adhesive sheet is used to achieve a seal with respect to a member having a rough surface, it is important that the sealing member firmly adhere to the rough surface. Furthermore, in view of environmentally conscious business activities, recycling of members having rough surfaces is expected to become important. In this case, for example, it is contemplated that a member having a rough surface is recycled by peeling off the sealing member adhering to the member having the rough surface. To enhance the efficiency of recycling members having rough surfaces, even upon high-speed peeling of a sealing member adhering to a member having a rough surface, it is important to prevent the sealing member from breaking and to prevent a portion of the pressure-sensitive adhesive sheet from remaining on the rough surface.

For example, as shown in the graph of FIG. 2(b), when the tack of the pressure-sensitive adhesive sheet is increased to make the pressure-sensitive adhesive sheet soft in view of adhesion of the sealing member to a rough surface, the pressure-sensitive adhesive sheet is likely to break, making it difficult to perform high-speed peeling of the sealing member. On the other hand, for example, as shown in FIG. 2(c), when the toughness of the pressure-sensitive adhesive sheet is increased to make the pressure-sensitive adhesive sheet hard in view of high-speed peeling of the sealing member, the tack of the pressure-sensitive adhesive sheet decreases, making it difficult for the sealing member to adhere to a rough surface. In view of these, the present inventors have conducted extensive studies on a pressure-sensitive adhesive sheet that is advantageous in terms of both adhesion of a sealing member to a rough surface and high-speed peeling of the sealing member.

Adhesion of a sealing member to a rough surface is closely related to low-speed behavior of the material of the pressure-sensitive adhesive sheet, and, in view of the time-temperature superposition principle of viscoelastic behavior, is considered to be closely related to high-temperature behavior of the material. On the other hand, high-speed peeling of a sealing member is closely related to high-speed behavior of the material of the pressure-sensitive adhesive sheet, and, in view of the time-temperature superposition principle of viscoelastic behavior, is considered to be closely related to low-temperature behavior of the material. Based on such considerations, the present inventors have repeatedly conducted extensive trial and error. As a result, the present inventors have newly found that, when the first dynamic shear storage modulus G'₀ and the second dynamic shear storage modulus G'₅₀ of the material included in the pressure-sensitive adhesive sheet 10 satisfy the above requirements, the pressure-sensitive adhesive sheet 10 can exhibit advantageous characteristics in terms of both adhesion of a sealing member to a rough surface and high-speed peeling of the sealing member.

The dynamic shear storage modulus of the material of the pressure-sensitive adhesive sheet 10 can be measured, for example, by the method described in the Examples section. A sample for measuring the dynamic shear storage modulus of the material of the pressure-sensitive adhesive sheet 10 used in the sealing member to be described later can be prepared, for example, by cutting out a portion of the pressure-sensitive adhesive sheet 10 from the sealing member or by dissolving the pressure-sensitive adhesive sheet 10 in a solvent and drying the solution thus obtained into a predetermined shape.

The first dynamic shear storage modulus G'₀ is not limited to a particular value as long as the first dynamic shear storage modulus G'₀ is higher than 1.0 × 10⁶ Pa. The first dynamic shear storage modulus G'₀ is, for example, higher than 1.0 × 10⁶ Pa and 5.0 × 10⁷ Pa or less. The first dynamic shear storage modulus G'₀ may be 1.2 × 10⁶ Pa or more, 1.5 × 10⁶ Pa or more, 2.0 × 10⁶ Pa or more, 2.5 × 10⁶ Pa or more, 3.0 × 10⁶ Pa or more, 5.0 × 10⁶ Pa or more, or 1.0 × 10⁷ Pa or more. The first dynamic shear storage modulus G'₀ may be 4.5 × 10⁷ Pa or less, 4.0 × 10⁷ Pa or less, 3.5 × 10⁷ Pa or less, 3.0 × 10⁷ Pa or less, 2.5 × 10⁷ Pa or less, or 2.0 × 10⁷ Pa or less.

The second dynamic shear storage modulus G'₅₀ is not limited to a particular value as long as the second dynamic shear storage modulus G'₅₀ is lower than 1.0 × 10⁶ Pa. The second dynamic shear storage modulus G'₅₀ is, for example, 1.0 × 10⁵ Pa or more and lower than 1.0 × 10⁶ Pa. The second dynamic shear storage modulus G'₅₀ may be 1.2 × 10⁵ Pa or more, 1.5 × 10⁵ Pa or more, 2.0 × 10⁵ Pa or more, or 2.5 × 10⁵ Pa or more. The second dynamic shear storage modulus G'₅₀ may be 9.8 × 10⁵ Pa or less, 9.5 × 10⁵ Pa or less, 9.0 × 10⁵ Pa or less, or 8.5 × 10⁵ Pa or less.

In the pressure-sensitive adhesive sheet 10, the ratio of the first dynamic shear storage modulus G'₀ to the second dynamic shear storage modulus G'₅₀, G'₀/G'₅₀, is not limited to a particular value. The ratio G'₀/G'₅₀ is, for example, 4.0 or more. In this case, the pressure-sensitive adhesive sheet 10 is more likely to exhibit advantageous characteristics in terms of both adhesion of a sealing member to a rough surface and high-speed peeling of the sealing member.

The ratio G'₀/G'₅₀ is desirably 4.5 or more, and more desirably 5 or more. The ratio G'₀/G'₅₀ is, for example, 150 or less, and may be 140 or less, 120 or less, 100 or less, 90 or less, 80 or less, 70 or less, 60 or less, or 55 or less.

The material of the pressure-sensitive adhesive sheet 10 is not limited to a particular material as long as the material of the pressure-sensitive adhesive sheet 10 has the first dynamic shear storage modulus G'₀ higher than 1.0 × 10⁶ Pa and the second dynamic shear storage modulus G'₅₀ lower than 1.0 × 10⁶ [Pa]. The pressure-sensitive adhesive sheet 10 contains, for example, a rubber-based polymer. The rubber-based polymer is, for example, a synthetic rubber, such as a thermoplastic elastomer or a thermosetting elastomer.

Examples of thermoplastic elastomers include olefin-based elastomers, styrene-based elastomers, butyl-based elastomers, and vinyl chloride-based elastomers. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene-styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

Examples of thermosetting elastomers include silicone rubber, fluorine rubber, acrylic rubber, and polyamide rubber.

The rubber-based polymer is desirably a thermoplastic elastomer, and more desirably a styrene-based elastomer. In the case where the rubber-based polymer is a styrene-based elastomer, the styrene-based elastomer desirably has 15 to 35% styrene units on a mass basis. In this case, the pressure-sensitive adhesive sheet 10 is more likely to exhibit advantageous characteristics in terms of both adhesion of a sealing member to a rough surface and high-speed peeling of the sealing member.

The weight-average molecular weight of the rubber-based polymer is, for example, 30,000 or more, desirably 50,000 or more, and more desirably 100,000 or more. The weight-average molecular weight of the rubber-based polymer is, for example, 5,000,000 or less, desirably 3,000,000 or less, and more desirably 1,000,000 or less. In this case, the surface of the pressure-sensitive adhesive sheet 10 is likely to have a desired adhesion. The weight-average molecular weight is measured by gel permeation chromatography, expressed in terms of polystyrene equivalents.

The material of the pressure-sensitive adhesive sheet 10 includes, for example, an elastomer and a tackifier. The elastomer can be, for example, the above rubber-based polymer.

The tackifier is not limited to a particular substance. The tackifier is, for example, a given resin. Examples of the resin include a rosin-based tackifier resin, a terpene-based tackifier resin, a hydrocarbon-based tackifier resin, a phenol-based tackifier resin, a ketone-based tackifier resin, a polyamide-based tackifier resin, an epoxy-based tackifier resin, and an elastomer-based tackifier resin. Examples of rosin-based tackifier resins include unmodified rosin, modified rosin, rosin-phenol-based resins, and rosin ester-based resins. Examples of terpene-based tackifier resins include terpene-based resins, terpene-phenol-based resins, styrene-modified terpene-based resins, aromatic modified terpene-based resins, and hydrogenated terpene-based resins. Examples of hydrocarbon-based tackifier resins include aliphatic hydrocarbon resins, aliphatic cyclic hydrocarbon resins, aromatic hydrocarbon resins, aliphatic and aromatic petroleum resins, aliphatic and alicyclic petroleum resins, hydrogenated hydrocarbon resins, coumarone-based resins, and coumarone-indene-based resins. Examples of aromatic hydrocarbon resins include styrene-based resins and xylene-based resins. Examples of phenol-based tackifier resins include alkylphenol-based resins, xylene formaldehyde-based resins, resol, and novolac. The tackifier is desirably a cycloaliphatic hydrocarbon resin or an aromatic hydrocarbon resin.

The content of the tackifier in the pressure-sensitive adhesive sheet 10 is not limited to a particular value. For example, in the pressure-sensitive adhesive sheet, the ratio of the content of the tackifier to the content of the elastomer such as the rubber-based polymer is, for example, 0.5 to 1 on a mass basis. Accordingly, the pressure-sensitive adhesive sheet 10 is more likely to exhibit advantageous characteristics in terms of both adhesion of a sealing member to a rough surface and high-speed peeling of the sealing member.

The thickness of the pressure-sensitive adhesive sheet 10 is not limited to a particular value. The thickness is, for example, 50 to 400 µm. The thickness of the pressure-sensitive adhesive sheet 10 may be 70 µm or more, or 80 µm or more. The thickness of the pressure-sensitive adhesive sheet 10 may be 300 µm or less, or 250 µm or less.

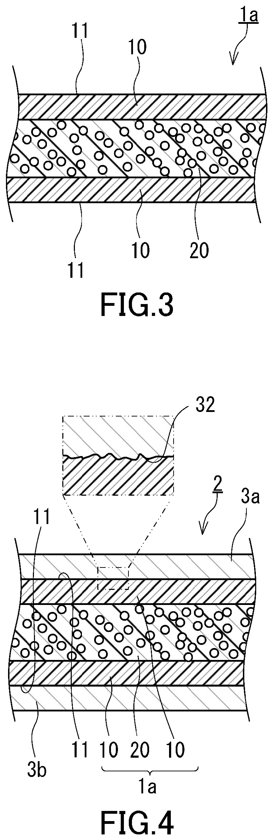

A sealing member including the pressure-sensitive adhesive sheet 10 can be provided. As shown in FIG. 3, a sealing member 1a includes the pressure-sensitive adhesive sheet 10 and a first layer 20 covered with the pressure-sensitive adhesive sheet 10. The pressure-sensitive adhesive sheet 10 covers, for example, a portion of the surface of the first layer 20. As described above, since the material of the pressure-sensitive adhesive sheet 10 has the first dynamic shear storage modulus G'₀ higher than 1.0 × 10⁶ Pa and the second dynamic shear storage modulus G'₅₀ lower than 1.0 × 10⁶ [Pa], the sealing member 1a is advantageous in terms of adhesion of the sealing member 1a to a rough surface and high-speed peeling of the sealing member 1a.

As shown in FIG. 3, the sealing member 1a includes, for example, a pair of the pressure-sensitive adhesive sheets 10, and the first layer 20 is disposed between the pair of pressure-sensitive adhesive sheets 10. The pair of pressure-sensitive adhesive sheets 10 are disposed, for example, on both surfaces of the sealing member 1a in the thickness direction of the pressure-sensitive adhesive sheet 10. Accordingly, pressure-sensitive adhesive surfaces 11 formed of the pressure-sensitive adhesive sheets 10 are formed on both surfaces of the sealing member 1a in the thickness direction of the pressure-sensitive adhesive sheet 10.

The material forming the first layer 20 is not limited to a particular material. The first layer 20 is, for example, a foam. In this case, even when a gap to be sealed is large, the gap can be easily filled with the sealing member 1a. In addition, since the first layer 20, which is a foam, can undergo compressive deformation to fit the gap, a sealing structure that exhibits watertight performance can be easily obtained using the sealing member 1a.

The structure of the foam is not limited to a particular structure. The foam has, for example, a closed-cell structure. In this case, the liquid-tightness inside the foam is high, making the sealing member 1a likely to exhibit desired watertight performance.

The foam may have, for example, a semi-open-cell/semi-closed-cell structure. In this case, the foam includes open cells before compressive deformation, and, for example, when the foam undergoes compressive deformation to generate a compressive strain of 50% or more, the structure of the foam changes to a structure similar to a closed-cell structure due to blockage of the open-cell portions. The foam may have, for example, an open-cell structure.

The material of the foam is not limited to a particular material. The foam may be, for example, a rubber foam or a resin foam. Examples of resin foams include urethane foam, silicone foam, and acrylic foam.

The foam is desirably a rubber foam. In this case, even when the compressive strain of the foam in the sealing structure to be described later is small, the sealing structure is likely to exhibit high watertight performance. The rubber foam is obtained by foaming a rubber composition containing, for example, rubber, a foaming agent, and a crosslinking agent.

The rubber may be, for example, an olefin-based elastomer, a styrene-based elastomer, a butyl-based elastomer, a vinyl chloride-based elastomer, or natural rubber. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene-styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

The rubber is desirably an olefin-based elastomer, and more desirably EPDM. In this case, even when the compressive strain of the foam in the sealing structure is small, the sealing structure is more likely to exhibit high watertight performance.

The EPDM is a rubber obtained by the copolymerization of ethylene, propylene, and a diene. By copolymerizing ethylene and propylene with a diene additionally, it is possible to introduce an unsaturated bond, enabling crosslinking with a crosslinking agent.

Examples of the diene include 5-ethylidene-2-norbornene, 1,4-hexadiene, and dicyclopentadiene. These dienes may be used alone, or a combination of two or more of these dienes may be used. In the case where the diene includes dicyclopentadiene, the degree of crosslinking can be improved.

The EPDM desirably has long-chain branching. A method for introducing a long branched chain into the EPDM is not limited to a particular method, and a known method is employed. In the case where the EPDM has long-chain branching, the rubber composition can be foamed well.

The content of the diene in the EPDM (diene content) is, for example, 1 mass% or more, desirably 2 mass% or more, and more desirably 3 mass% or more. The diene content is, for example, 20 mass% or less, and desirably 15 mass% or less. In this case, the rubber foam is less susceptible to the occurrence of surface shrinkage, and the rubber foam is less susceptible to the occurrence of a crack.

The foaming agent may be an organic foaming agent or an inorganic foaming agent.

Examples of the organic foaming agent include an azo-based foaming agent, an N-nitroso-based foaming agent, a hydrazide-based foaming agent, a semicarbazide-based foaming agent, a fluorinated alkane-based foaming agent, a triazole-based foaming agent, and other known organic foaming agents. Examples of azo-based foaming agents include azodicarbonamide (ADCA), barium azodicarboxylate, azobisisobutyronitrile (AIBN), azocyclohexylnitrile, and azodiaminobenzene. Examples of N-nitroso-based foaming agents include N,N'-dinitrosopentamethylenetetramine (DTP), N,N'-dimethyl-N,N'-dinitrosoterephthalamide, and trinitrosotrimethyltriamine. Examples of hydrazide-based foaming agents include 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide). Examples of semicarbazide-based foaming agents include p-toluenesulfonylsemicarbazide and 4,4'-oxybis(benzenesulfonylsemicarbazide). Examples of fluorinated alkane-based foaming agents include trichloromonofluoromethane and dichloromonofluoromethane. Examples of triazole-based foaming agents include 5-morpholyl-1,2,3,4-thiatriazole. The organic foaming agent may be a thermally expandable microparticle in which a thermally expandable substance is encapsulated in a microcapsule. Such a thermally expandable microparticle is, for example, a commercially available product such as Microsphere (product name, manufactured by Matsumoto Yushi-Seiyaku Co., Ltd.).

Examples of the inorganic foaming agent include a hydrogen carbonate, a carbonate, a nitrite, a borohydride, an inorganic azide, and other known inorganic foaming agents. Examples of hydrogen carbonates include sodium hydrogen carbonate and ammonium hydrogen carbonate. Examples of carbonates include sodium carbonate and ammonium carbonate. Examples of nitrites include sodium nitrite and ammonium nitrite. Examples of borohydrides include sodium borohydride. These foaming agents may be used alone, or a combination of two or more of these foaming agents may be used.

The mixing amount of the foaming agent is, for example, 0.1 parts by mass or more, desirably 1 part by mass or more, and more desirably 10 parts by mass or more, relative to 100 parts by mass of the rubber. The mixing amount of the foaming agent is, for example, 50 parts by mass or less, and desirably 30 parts by mass or less.

Examples of the crosslinking agent include sulfur (S8) and a sulfur compound, such as 4,4'-dithiodimorpholine, selenium, magnesium oxide, lead monoxide, a quinoid compound, such as p-quinone dioxime, p,p'-dibenzoylquinone dioxime, or poly-p-dinitrosobenzene, a polyamine, a nitroso compound, such as p-dinitrosobenzene, an organic peroxide, a resin, and an ammonium salt, such as ammonium benzoate. Examples of organic peroxides include dicumyl peroxide, dimethyldi(t-butylperoxy)hexane, 1,1-di(t-butylperoxy)cyclohexane, and α,α'-di(t-butylperoxy)diisopropylbenzene. Examples of resins include alkylphenol-formaldehyde resins and melamine-formaldehyde condensates. These crosslinking agents may be used alone, or a combination of two or more of these crosslinking agents may be used.

The crosslinking agent is desirably sulfur (S8) and a sulfur compound, a quinoid compound, or an organic peroxide. Sulfur (S8) and sulfur compounds are advantageous in terms of achieving excellent mechanical strength and excellent foaming properties. Quinoid compounds are advantageous in terms of reducing the sulfur atom content, reducing corrosive properties, and achieving excellent foaming properties. Organic peroxides are advantageous in terms of improving adhesion, conformability to steps, etc., with respect to the object for achieving a sealing structure.

The mixing proportion of the crosslinking agent is, for example, 0.05 parts by mass or more, desirably 0.5 parts by mass or more, and more desirably 1 part by mass or more, relative to 100 parts by mass of the rubber. The mixing proportion of the crosslinking agent is, for example, 30 parts by mass or less, desirably 20 parts by mass or less, and more desirably 10 parts by mass or less, relative to 100 parts by mass of the rubber.

The crosslinking agent may be a combination of a quinoid compound and an organic peroxide. In this case, sufficient crosslinking on the surface of the foam is likely to occur. In the case where the combination of a quinoid compound and an organic peroxide is used, the mixing proportion of the organic peroxide is, for example, 1 part by mass or more, and more desirably 10 parts by mass or more, relative to 100 parts by mass of the quinoid compound. The mixing proportion is, for example, 100 parts by mass or less, and desirably 50 parts by mass or less, relative to 100 parts by mass of the quinoid compound.

The rubber composition desirably contains a foaming aid and a crosslinking aid. Examples of the foaming aid include a urea-based foaming aid, a salicylic acid-based foaming aid, a benzoic acid-based foaming aid, and a metal oxide, such as zinc oxide. Preferred examples of the foaming aid include a urea-based foaming aid and a metal oxide. These foaming aids may be used alone, or a combination of two or more of these foaming aids may be used.

The mixing proportion of the foaming aid is, for example, 0.5 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

Examples of the crosslinking aid include a thiazole, a thiourea, a dithiocarbamate, a guanidine, a sulfenamide, a thiuram, a xanthate, an aldehyde ammonia, and an aldehyde amine. Among these, a thiazole, a thiourea, a dithiocarbamate, or a thiuram is desirably used as the crosslinking aid. Examples of thiazoles include dibenzothiazyl disulfide and 2-mercaptobenzothiazole. Examples of thioureas include diethylthiourea, trimethylthiourea, and dibutylthiourea. Examples of dithiocarbamates include sodium dimethyldithiocarbamate, sodium diethyldithiocarbamate, zinc dimethyldithiocarbamate, zinc diethyldithiocarbamate, and zinc dibenzyl dithiocarbamate. Examples of guanidines include diphenylguanidine and di-o-tolylguanidine. Examples of sulfenamides include benzothiazyl-2-diethylsulfenamide and N-cyclohexyl-2-benzothiazylsulfenamide. Examples of thiurams include tetramethylthiuram monosulfide, tetramethylthiuram disulfide, and tetrabenzylthiuram disulfide. Examples of xanthates include sodium isopropyl xanthate and zinc isopropyl xanthate. Examples of aldehyde ammonias include acetaldehyde ammonia and hexamethylenetetramine. Examples of aldehyde amines include n-butyraldehyde aniline and butyraldehyde monobutylamine.

The crosslinking aid may be an alcohol. Examples of alcohols include monohydric alcohols, such as ethanol, dihydric alcohols, such as ethylene glycol, trihydric alcohols, such as glycerin, and polyols (polyoxyethylene glycols), such as polyethylene glycol and polypropylene glycol. Desirably, a polyol is used as the alcohol. In this case, the number-average molecular weight of the polyol is, for example, 200 or more, and desirably 300 or more. The number-average molecular weight of the polyol is, for example, 10,000 or less, and desirably 5,000 or less.

These crosslinking aids may be used alone, or a combination of two or more of these crosslinking aids may be used.

In the case where sulfur and a sulfur compound are used as the crosslinking agent, a thiazole, a thiourea, a dithiocarbamate, or a thiuram is desirably used as the crosslinking aid in terms of ensuring good foam shape and good flexibility of the foam.

In the case where a quinoid compound is used as the crosslinking agent, the crosslinking aid used is desirably an alcohol, and more desirably a polyol, in terms of reducing corrosive properties. In particular, in the case where a derivative of p-quinone dioxime is used as the quinoid compound, the use of polyethylene glycol is advantageous. In the case where polyethylene glycol is used as the polyol, the rubber composition can be cross-linked well, making excellent foaming properties likely to be ensured.

The mixing proportion of the crosslinking aid is, for example, 0.01 parts by mass or more, desirably 0.02 parts by mass or more, and more desirably 0.06 parts by mass or more, relative to 100 parts by mass of the rubber. The mixing proportion is, for example, 20 parts by mass or less, desirably 10 parts by mass or less, and more desirably 5 parts by mass or less, relative to 100 parts by mass of the rubber.

The rubber composition may contain an additive such as a lubricant (processing aid), a pigment, a filler, a flame retardant, or a softener, as needed.

Examples of the lubricant include stearic acids, esters thereof, stearate compounds, such as zinc stearate, and paraffin. These lubricants may be used alone, or a combination of two or more of these lubricants may be used. The mixing proportion of the lubricant is, for example, 0.1 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

An example of the pigment is carbon black. Pigments may be used alone, or a combination of two or more pigments may be used. The mixing proportion of the pigment is, for example, 1 part by mass or more, and desirably 2 parts by mass or more, relative to 100 parts by mass of the rubber. The mixing proportion is, for example, 50 parts by mass or less, and desirably 30 parts by mass or less, relative to 100 parts by mass of the rubber.

The filler may be an inorganic filler, an organic filler, or any other known filler. Examples of the inorganic filler include calcium carbonate, magnesium carbonate, silicic acids and salts thereof, clay, talc, mica powder, bentonite, silica, alumina, aluminum silicate, and aluminum powder. An example of the organic filler is cork. These fillers may be used alone, or a combination of two or more of these fillers may be used. The mixing proportion of the filler is, for example, 10 parts by mass or more, desirably 30 parts by mass or more, and more desirably 50 parts by mass or more, relative to 100 parts by mass of the rubber. The mixing proportion is, for example, 300 parts by mass or less, and desirably 200 parts by mass or less, relative to 100 parts by mass of the rubber.

Examples of the flame retardant include hydroxides, such as calcium hydroxide, magnesium hydroxide, and aluminum hydroxide. These flame retardants may be used alone, or a combination of two or more of these flame retardants may be used. The mixing proportion of the flame retardant is, for example, 5 parts by mass or more, desirably 10 parts by mass or more, and more desirably 15 parts by mass or more, relative to 100 parts by mass of the rubber. The mixing proportion is, for example, 200 parts by mass or less, desirably 150 parts by mass or less, and more desirably 100 parts by mass or less, relative to 100 parts by mass of the rubber.

Examples of the softener include petroleum-based oils, asphalt, low-molecular-weight polymers, organic acid esters, and tackifiers. Examples of petroleum-based oils include paraffinic process oils, such as paraffin oil, naphthenic process oils, drying oils or animal and vegetable oils, and aromatic process oils. An example of drying oils or animal and vegetable oils is flaxseed oil. Examples of organic acid esters include phthalates, such as di-2-ethylhexyl phthalate (DOP) and dibutyl phthalate (DBP), phosphate esters, higher fatty acid esters, and alkyl sulfonate esters. The softener used is desirably a petroleum-based oil or asphalt, and more desirably a paraffinic process oil. These softeners may be used alone, or a combination of two or more of these softeners may be used. The mixing proportion of the softener is, for example, 5 parts by mass or more, and desirably 10 parts by mass or more, relative to 100 parts by mass of the rubber. The mixing proportion is, for example, 300 parts by mass or less, and more desirably 200 parts by mass or less, relative to 100 parts by mass of the rubber.

The rubber composition may contain a known additive such as a plasticizer, an anti-aging agent, an antioxidant, a colorant, an anti-fungal agent, or a non-rubber polymer, depending on its purpose and application.

The thickness of the sealing member 1a is not limited to a particular thickness. The sealing member 1a has a thickness of, for example, 1 to 40 mm. The thickness of the sealing member 1a may be 2 mm or more, 3 mm or more, or 5 mm or more. The thickness of the sealing member 1a may be 35 mm or less, 30 mm or less, 25 mm or less, or 20 mm or less.

A sealing structure can be provided using the sealing member 1a. As shown in FIG. 4, a sealing structure 2 includes a first member 3a, a second member 3b, and the sealing member 1a. In the sealing structure 2, the sealing member 1a seals a gap between the first member 3a and the second member 3b. With such a configuration, for example, even when the surfaces of the first member 3a and the second member 3b that are in contact with the sealing member 1a are each a rough surface, the sealing member 1a can easily adhere to the rough surface. In addition, the sealing member 1a can be easily peeled off at a high speed from at least one selected from the group consisting of the first member 3a and the second member 3b.

As shown in FIG. 4, for example, at least one selected from the group consisting of the first member 3a and the second member 3b has a rough surface 32 in contact with the sealing member 1a. The arithmetic mean roughness Rₐ of the rough surface 32 determined in accordance with Japanese Industrial Standards (JIS) B0601:2013 is not limited to a particular value. The arithmetic mean roughness Rₐ of the rough surface 32 is, for example, 0.3 µm or more. Even in such a case, the sealing member 1a can easily adhere to the rough surface 32. The arithmetic mean roughness Rₐ of the rough surface 32 is, for example, 1.0 µm or less.

The sealing member 1a can be placed in environments of various temperatures before use, depending on circumstances of storage or transportation. For example, in some cases, it is desirable that even when stored or transported in environments of relatively high temperatures, the sealing member 1a be less susceptible to change in adhesion. From such a perspective, attention may be directed to the ratio of an adhesion F1 [N/15 mm] to an adhesion F2 [N/15 mm], F1/F2. The adhesion F1 [N/15 mm] is an adhesion measured by adhering the sealing member 1a, which has been left in a non-adhered state in an environment of 60°C for 7 days, to a polypropylene (PP) surface and then pulling the sealing member 1a in a direction at 90° with respect to the PP surface to peel off the sealing member 1a. The adhesion F2 is an adhesion measured by adhering an initial sample of the sealing member 1a, which has not been left in an environment of 60°C for 7 days, to a PP surface and then pulling the sealing member 1a in a direction at 90° with respect to the PP surface to peel off the sealing member 1a. The adhesion F1 and the adhesion F2 can be measured, for example, by the method described in the Examples section.

As described above, the sealing member 1a may be placed in environments of various temperatures before use, depending on circumstances of storage or transportation, and is not necessarily stored or transported in environments of relatively high temperatures. Accordingly, the ratio F1/F2 in the sealing member 1a is not limited to a particular value. The ratio F1/F2 is, for example, 0.5 or more. In this case, even when the sealing member 1a is stored or transported in environments of relatively high temperatures before use, the sealing member 1a can easily adhere to a rough surface. The ratio F1/F2 may be less than 0.5.

The ratio F2/F1 is desirably 0.55 or more, more desirably 0.6 or more, and still more desirably 0.65 or more. The ratio F2/F1 is, for example, 1 or less.

The sealing member 1a can be modified in various respects. For example, one of the pair of pressure-sensitive adhesive sheets 10 may be a pressure-sensitive adhesive sheet different from the pressure-sensitive adhesive sheet 10. In this case, the first dynamic shear storage modulus G'₀ and the second dynamic shear storage modulus G'₅₀ of the material of the different pressure-sensitive adhesive sheet may each be not less than 1.0 × 10⁶ [Pa] or not more than 1.0 × 10⁶ [Pa].

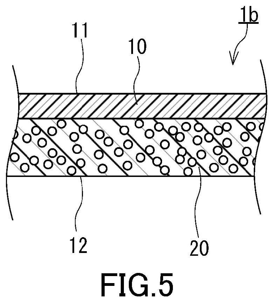

The sealing member 1a may be modified as a sealing member 1b shown in FIG. 5. The sealing member 1b is configured in the same manner as the sealing member 1a except for portions that are particularly described. The same reference signs are assigned to the components of the sealing member 1b that are identical to or correspond to the components of the sealing member 1a, and detailed descriptions thereof are omitted. The description of the sealing member 1a applies to the sealing member 1b unless there is a technical inconsistency.

As shown in FIG. 5, the sealing member 1b includes one pressure-sensitive adhesive sheet 10 and the first layer 20, which is a foam. The pressure-sensitive adhesive sheet 10 forms one end surface 11 of the sealing member 1b in the thickness direction. The first layer 20 forms the other end surface 12 of the sealing member 1b in the thickness direction.

### Examples

The present invention will be described in more detail below with reference to examples. The present invention is not limited to the following examples.

### <Example 1>

An SEBS resin, Tuftec H1041, manufactured by Asahi Kasei Corporation and a tackifier, T-REZ HA125, manufactured by ENEOS Materials Corporation were kneaded in the respective mixing proportions of 100 parts by mass and 80 parts by mass at 165°C to obtain a mixture. This SEBS resin had a styrene unit content of 30 mass%. The mixture was heat-pressed at 170°C and 4 MPa for 60 seconds to form a sheet having a thickness of 100 µm, and a pressure-sensitive adhesive sheet according to Example 1 was thus obtained. Furthermore, a sheet formed under the same conditions to a thickness of 300 µm was punched into a circular shape having a diameter of 8 mm, and an evaluation sample according to Example 1 was thus prepared.

Using the pressure-sensitive adhesive sheet according to Example 1, three types of sealing members 1A, 1B, and 1C were produced. In the sealing member 1A, a foam, No. 6800, manufactured by Nitto Denko Corporation was disposed between two pressure-sensitive adhesive sheets according to Example 1. In the sealing member 1B, a foam, EE-1000, manufactured by Nitto Denko Corporation was disposed between two pressure-sensitive adhesive sheets according to Example 1. In the sealing member 1C, one pressure-sensitive adhesive sheet according to Example 1 and one piece of the foam EE-1000 manufactured by Nitto Denko Corporation were stacked. The foam No. 6800 was an EPDM foam having a closed-cell structure and had a thickness of 10 mm. The foam EE-1000 was an EPDM foam having an open-cell structure and had a thickness of 10 mm. In each sealing member, a pressure of 2 kPa was applied to the stack of the pressure-sensitive adhesive sheet and the foam for 5 minutes in an oven set at 140°C to bond the pressure-sensitive adhesive sheet and the foam to each other. Thus, the three types of sealing members according to Example 1 were obtained.

### <Example 2>

Except for the following points, the same procedure as in Example 1 was followed to obtain a pressure-sensitive adhesive sheet according to Example 2 and an evaluation sample according to Example 2. The respective mixing proportions of the SEBS resin and the tackifier were changed to 100 parts by mass and 60 parts by mass. Except for the use of the pressure-sensitive adhesive sheet according to Example 2 instead of the pressure-sensitive adhesive sheet according to Example 1, the same procedure as that for the sealing member 1A was followed to obtain a sealing member according to Example 2.

### <Example 3>

Except for the following points, the same procedure as in Example 1 was followed to obtain a pressure-sensitive adhesive sheet according to Example 3 and an evaluation sample according to Example 3. As the tackifier, a tackifier T-REZ HA105 was used instead of the tackifier T-REZ HA125. Except for the use of the pressure-sensitive adhesive sheet according to Example 3 instead of the pressure-sensitive adhesive sheet according to Example 1, the same procedure as that for the sealing member 1A was followed to obtain a sealing member according to Example 3.

### <Example 4>

Except for the following points, the same procedure as in Example 1 was followed to obtain a pressure-sensitive adhesive sheet according to Example 4 and an evaluation sample according to Example 4. As the tackifier, a tackifier, ARKON P-100, manufactured by ARAKAWA CHEMICAL INDUSTRIES, LTD. was used instead of the tackifier T-REZ HA125. Except for the use of the pressure-sensitive adhesive sheet according to Example 4 instead of the pressure-sensitive adhesive sheet according to Example 1, the same procedure as that for the sealing members 1A, 1B, and 1C was followed to obtain three types of sealing members according to Example 4.

### <Example 5>

Except for the following points, the same procedure as in Example 1 was followed to obtain a pressure-sensitive adhesive sheet according to Example 5 and an evaluation sample according to Example 5. As the SEBS resin, Tuftec H1052, manufactured by Asahi Kasei Corporation was used instead of Tuftec H1041. This SEBS resin had a styrene unit content of 20 mass%. Except for the use of the pressure-sensitive adhesive sheet according to Example 5 instead of the pressure-sensitive adhesive sheet according to Example 1, the same procedure as that for the sealing members 1A, 1B, and 1C was followed to obtain three types of sealing members according to Example 5.

### <Example 6>

Except for the following points, the same procedure as in Example 1 was followed to obtain a pressure-sensitive adhesive sheet according to Example 6 and an evaluation sample according to Example 6. As the SEBS resin, Tuftec H1062, manufactured by Asahi Kasei Corporation was used instead of Tuftec H1041. This SEBS resin had a styrene unit content of 18 mass%. Except for the use of the pressure-sensitive adhesive sheet according to Example 6 instead of the pressure-sensitive adhesive sheet according to Example 1, the same procedure as that for the sealing member 1A was followed to obtain a sealing member according to Example 6.

### <Example 7>

Except for the following points, the same procedure as in Example 1 was followed to obtain a pressure-sensitive adhesive sheet according to Example 7 and an evaluation sample according to Example 7. As the SEBS resin, a mixture of Tuftec H1062 and Tuftec H1517 was used instead of Tuftec H1041. This mixture had a mass ratio of Tuftec H1062:Tuftec H1517 = 80:20. This SEBS resin mixture had a styrene unit content of 23 mass%. Except for the use of the pressure-sensitive adhesive sheet according to Example 7 instead of the pressure-sensitive adhesive sheet according to Example 1, the same procedure as that for the sealing member 1A was followed to obtain a sealing member according to Example 7.

### <Example 8>

Except for the following points, the same procedure as in Example 1 was followed to obtain a pressure-sensitive adhesive sheet according to Example 8 and an evaluation sample according to Example 8. As the SEBS resin, a mixture of Tuftec H1062 and Tuftec H1517 was used instead of Tuftec H1041. This mixture had a mass ratio of Tuftec H1062:Tuftec H1517 = 75:25. This SEBS resin mixture had a styrene unit content of 24.3 mass%. Except for the use of the pressure-sensitive adhesive sheet according to Example 8 instead of the pressure-sensitive adhesive sheet according to Example 1, the same procedure as that for the sealing members 1A, 1B, and 1C was followed to obtain three types of sealing members according to Example 8.

### <Example 9>

Except for the following points, the same procedure as in Example 1 was followed to obtain a pressure-sensitive adhesive sheet according to Example 9 and an evaluation sample according to Example 9. As the SEBS resin, a mixture of Tuftec H1062 and Tuftec H1517 was used instead of Tuftec H1041. This mixture had a mass ratio of Tuftec H1062:Tuftec H1517 = 70:30. This SEBS resin mixture had a styrene unit content of 25.5 mass%. Except for the use of the pressure-sensitive adhesive sheet according to Example 9 instead of the pressure-sensitive adhesive sheet according to Example 1, the same procedure as that for the sealing members 1A, 1B, and 1C was followed to obtain three types of sealing members according to Example 9.

### <Example 10>

Except for the following points, the same procedure as in Example 1 was followed to obtain a pressure-sensitive adhesive sheet according to Example 10 and an evaluation sample according to Example 10. As the SEBS resin, a mixture of Tuftec H1062 and Tuftec H1517 was used instead of Tuftec H1041. This mixture had a mass ratio of Tuftec H1062:Tuftec H1517 = 65:35. This SEBS resin mixture had a styrene unit content of 26.8 mass%. Except for the use of the pressure-sensitive adhesive sheet according to Example 10 instead of the pressure-sensitive adhesive sheet according to Example 1, the same procedure as that for the sealing members 1A, 1B, and 1C was followed to obtain three types of sealing members according to Example 10.

### <Comparative Example 1>

Except for the following points, the same procedure as in Example 1 was followed to obtain a pressure-sensitive adhesive sheet according to Comparative Example 1 and an evaluation sample according to Comparative Example 1. An SBS resin, Kraton D1155, manufactured by KRATON CORPORATION was used instead of Tuftec H1041. As the tackifier, ARKON M-115, manufactured by ARAKAWA CHEMICAL INDUSTRIES, LTD. was used instead of T-REZ HA125. The respective mixing proportions of the SBS resin and the tackifier were adjusted to 100 parts by mass and 35 parts by mass. Except for the use of the pressure-sensitive adhesive sheet according to Comparative Example 1 instead of the pressure-sensitive adhesive sheet according to Example 1, the same procedure as that for the sealing member 1A was followed to obtain a sealing member according to Comparative Example 1.

### <Comparative Example 2>

Except for the following points, the same procedure as in Example 1 was followed to obtain a pressure-sensitive adhesive sheet according to Comparative Example 2 and an evaluation sample according to Comparative Example 2. The respective mixing proportions of the SEBS resin and the tackifier were changed to 100 parts by mass and 120 parts by mass. Except for the use of the pressure-sensitive adhesive sheet according to Comparative Example 2 instead of the pressure-sensitive adhesive sheet according to Example 1, the same procedure as that for the sealing member 1A was followed to obtain a sealing member according to Comparative Example 2.

### <Comparative Example 3>

Except for the following points, the same procedure as in Example 1 was followed to obtain a pressure-sensitive adhesive sheet according to Comparative Example 3 and an evaluation sample according to Comparative Example 3. The respective mixing proportions of the SEBS resin and the tackifier were changed to 100 parts by mass and 40 parts by mass. Except for the use of the pressure-sensitive adhesive sheet according to Comparative Example 3 instead of the pressure-sensitive adhesive sheet according to Example 1, the same procedure as that for the sealing member 1A was followed to obtain a sealing member according to Comparative Example 3.

### <Comparative Example 4>

Except for the following points, the same procedure as in Example 1 was followed to obtain a pressure-sensitive adhesive sheet according to Comparative Example 4 and an evaluation sample according to Comparative Example 4. An SEBS resin, Kraton D1657, manufactured by KRATON CORPORATION was used instead of Tuftec H1041. As the tackifier, ARKON M-115, manufactured by ARAKAWA CHEMICAL INDUSTRIES, LTD. was used instead of T-REZ HA125. The respective mixing proportions of the SEBS resin and the tackifier were adjusted to 100 parts by mass and 60 parts by mass. Except for the use of the pressure-sensitive adhesive sheet according to Comparative Example 4 instead of the pressure-sensitive adhesive sheet according to Example 1, the same procedure as that for the sealing member 1A was followed to obtain a sealing member according to Comparative Example 4.

### (Dynamic Viscoelasticity Measurement)

Dynamic viscoelasticity measurement was conducted under the conditions described below using a rotational rheometer, ARES-G2, manufactured by TA Instruments, with each of the evaluation samples of the examples and comparative examples sandwiched between stainless steel jigs having a diameter of 8 mm. Based on the measurement results, the dynamic shear storage modulus G'₀ at 1 Hz and 0°C and the dynamic shear storage modulus G'₅₀ at 1 Hz and 50°C were determined. The results are shown in Tables 1A, 1B, 1C, 1D, and 2.
Measurement mode: shear
Frequency: 1 Hz
Axial load: 0.02 N
Temperature range: -50 to 180°C
Heating rate: 5°C/min

### (Rough-Surface Adhesion Test)

The sealing members according to the examples and comparative examples were each cut into a rectangular shape having a width of 20 mm and a length of 150 mm in plan view to prepare test specimens for a rough-surface adhesion test. The surface of a SUS304 steel plate was polished for 30 seconds using a sander polisher fitted with #600 sandpaper to form a rough surface. The arithmetic mean roughness Rₐ of the rough surface determined in accordance with JIS B0601:2013 was 0.7 µm. The steel plate had a thickness of 0.4 mm, and had a rectangular shape having a width of 40 mm and a length of 200 mm in plan view. With the surface formed of the pressure-sensitive adhesive sheet of each test specimen being brought into contact with the rough surface of the steel plate, a roller having a weight of 2 kg was moved back and forth once on the test specimen to pressure-bond the test specimen onto the rough surface. After 10 seconds elapsed from the pressure-bonding of the test specimen onto the rough surface, with the steel plate having the sealing member adhered thereto tilted sideways, the edge portion of the steel plate was tapped against a table 10 times. The adhesion performance of the sealing member was evaluated in accordance with the following criteria.
Good: The sealing member adheres to the steel plate without gaps.
Not enough: The sealing member slips off the steel plate, or a gap is observed between a portion of the sealing member and the rough surface of the steel plate.

### (High-Speed Peel Test)

The sealing members according to the examples and comparative examples were each cut into a rectangular shape having a width of 20 mm and a length of 150 mm in plan view to prepare test specimens for a high-speed peel test. With the surface formed of the pressure-sensitive adhesive sheet of this test specimen being brought into contact with the surface of a steel plate, a roller having a weight of 2 kg was moved back and forth once on the test specimen to pressure-bond the test specimen onto the surface of the steel plate. The steel plate had a thickness of 0.4 mm, and had a rectangular shape having a width of 40 mm and a length of 200 mm in plan view. After the pressure-bonding of the test specimen onto the surface of the steel plate, the test specimen and the steel plate were allowed to stand for 24 hours in an environment of 23°C and 50% relative humidity. Thereafter, the test specimen was peeled from the surface of the steel plate at a speed of 30 m/min and an angle of 30°. The ease of high-speed peeling was evaluated in accordance with the following criteria.
Good: The sealing member does not break and no residue of the pressure-sensitive adhesive sheet is observed on the steel plate.
Not enough: The sealing member breaks, or residue of the pressure-sensitive adhesive sheet is observed on the steel plate.

The sealing members according to the examples were each punched into an annular ring shape having an inner diameter of 50 mm and an outer diameter of 70 mm to prepare test specimens for an IPX7 test. Each test specimen was placed between two acrylic plates, and spacers were arranged around the test specimen between the two acrylic plates to fix the test specimen in a state where a given compressive strain was induced in the thickness direction of the acrylic plates. The acrylic plates were Acrylite EX, manufactured by Mitsubishi Chemical Corporation, and had a thickness of 10 mm. Thus, a sample for an IPX7 test was prepared. Acrylite is a registered trademark. This sample was submerged in a water tank filled with water to a depth of 1 m and was taken out after a lapse of 30 minutes. Inspection was performed for the presence or absence of water leakage into the interior of each annular-ring-shaped test specimen to determine whether the sample complied with the IPX7 standard. A case in which no water leakage is observed can be evaluated as compliant with the IPX7 standard.

### (Pressure-Sensitive Adhesion after Storage)

The sealing members according to Examples 6 to 10 were each cut into a rectangular shape having a width of 15 mm and a length of 150 mm in plan view, and the cut pieces were each allowed to stand for 7 days inside a thermostatic chamber set at 60°C to prepare storage-treated samples. Furthermore, the sealing members according to Examples 6 to 10 were each cut into a rectangular shape having a width of 15 mm and a length of 150 mm in plan view, and the cut pieces were not allowed to stand for 7 days in a thermostatic chamber set at 60°C to prepare initial samples. With each sample thus obtained being brought into contact with the surface of a polypropylene (PP) plate, a roller having a weight of 2 kg was moved back and forth once on the sample to pressure-bond the sample onto the surface of the PP plate. The PP plate had a rectangular surface having a width of 40 mm and a length of 200 mm in plan view and had a thickness of 2 mm. Each sample pressure-bonded onto the PP plate was allowed to stand for 24 hours in an environment of 23°C and 50% relative humidity. Thereafter, using a universal testing machine, Autograph, manufactured by Shimadzu Corporation, the sample was pulled in a direction at 90° with respect to the surface of the PP plate at a speed of 300 mm/min to peel the sample from the surface of the PP plate, and the adhesions F1 and F2 were measured. The results are shown in Tables 1C and 1D.

As shown in Tables 1A, 1B, 1C, 1D, and 2, the evaluation results of the rough-surface adhesion test and the evaluation results of the high-speed peel test on the sealing members according to the examples were rated as Good. For the sealing members according to Comparative Examples 1 and 3, the evaluation results of the high-speed peel test were rated as Good, but the evaluation results of the rough-surface adhesion test were rated as Not enough. Furthermore, for the sealing members according to Comparative Examples 2 and 4, the evaluation results of the rough-surface adhesion test were rated as Good, but the evaluation results of the high-speed peel test were rated as Not enough. From a comparison between the examples and the comparative examples, it is understood that in the material of the pressure-sensitive adhesive sheet of the sealing member, when the dynamic shear storage modulus G'₀ at 1 Hz and 0°C is higher than 1.0 × 10⁶ Pa and the dynamic shear storage modulus G'₅₀ at 1 Hz and 50°C is lower than 1.0 × 10⁶ Pa, the sealing member is advantageous in terms of adhesion to a rough surface and high-speed peeling.

As shown in Tables 1C and 1D, for the sealing members according to Examples 6 to 10, the ratio (F1/F2) of the adhesion (F1) of the storage-treated sample to the surface of the PP plate to the adhesion (F2) of the initial sample to the surface of the PP plate was 0.5 or more. Therefore, it is considered that even when these sealing members are stored or transported at relatively high temperatures before use, high adhesion is likely to be maintained and the sealing members can be easily adhered to a rough surface.

A first aspect of the present invention provides a pressure-sensitive adhesive sheet, wherein
a first dynamic shear storage modulus (G') is higher than 1.0 × 10⁶ Pa, the first dynamic shear storage modulus (G') being a dynamic shear storage modulus (G') of a material of the pressure-sensitive adhesive sheet at 1 Hz and 0°C, and
a second dynamic shear storage modulus (G') is lower than 1.0 × 10⁶ Pa, the second dynamic shear storage modulus (G') being a dynamic shear storage modulus (G') of the material at 1 Hz and 50°C.

A second aspect of the present invention provides the pressure-sensitive adhesive sheet according to the first aspect, wherein
a ratio of the first dynamic shear storage modulus (G') to the second dynamic shear storage modulus (G') is 4.0 or more.

A third aspect of the present invention provides the pressure-sensitive adhesive sheet according to the first or second aspect, wherein
the material includes a styrene-based elastomer having 15 to 35% styrene units on a mass basis.

A fourth aspect of the present invention provides the pressure-sensitive adhesive sheet according to any one of the first to third aspects, wherein
the material includes an elastomer and a tackifier, and
a ratio of a content of the tackifier to a content of the elastomer is 0.5 to 1 on a mass basis.

A fifth aspect of the present invention provides a sealing member including:
the pressure-sensitive adhesive sheet according to any one of the first to fourth aspects; and
a first layer covered with the pressure-sensitive adhesive sheet.

A sixth aspect of the present invention provides the sealing member according to the fifth aspect, wherein
the first layer is a foam.

A seventh aspect of the present invention provides the sealing member according to the fifth or sixth aspect, wherein
the sealing member has a thickness of 1 to 40 mm.

An eighth aspect of the present invention provides a sealing structure including:
a first member;
a second member; and
the sealing member according to any one of the fifth to seventh aspects, wherein
the sealing member seals a gap between the first member and the second member.

A ninth aspect of the present invention provides the sealing structure according to the eighth aspect, wherein
at least one selected from the group consisting of the first member and the second member has a rough surface in contact with the sealing member, and
an arithmetic mean roughness Rₐ of the rough surface determined in accordance with Japanese Industrial Standards (JIS) B0601:2013 is 0.3 µm or more.

**[Table 1A]**

| | Example 1 | | | Example 2 | Example 3 |
|---|---|---|---|---|---|
| Styrene unit content in styrene-based elastomer [mass%] | 30 | | | 30 | 30 |
| Content ratio of tackifier to elastomer on mass basis | 0.8 | | | 0.6 | 0.8 |
| Dynamic shear storage modulus at 1 Hz and 0°C (G'₀) [× 10⁶ Pa] | 18 | | | 15 | 10 |
| Dynamic shear storage modulus at 1 Hz and 50°C (G'₅₀) [× 10⁶ Pa] | 0.41 | | | 0.81 | 0.57 |
| G'₀/G'₅₀ | 43.9 | | | 18.5 | 17.5 |
| Pressure-sensitive adhesive sheet placement in sealing member | Both surfaces | Both surfaces | One surface | Both surfaces | Both surfaces |
| Foam type in sealing member | Closed-cell foam | Open-cell foam | Open-cell foam | Closed-cell foam | Closed-cell foam |
| Rough-surface adhesion test results for sealing member | Good | Good | Good | Good | Good |
| High-speed peel test results for sealing member | Good | Good | Good | Good | Good |
| IPX7 test | Good | Good | Good | Good | Good |

**[Table 1B]**

| | Example 4 | | | Example 5 | | |
|---|---|---|---|---|---|---|
| Styrene unit content in styrene-based elastomer [mass%] | 30 | | | 20 | | |
| Content ratio of tackifier to elastomer on mass basis | 0.8 | | | 0.8 | | |
| Dynamic shear storage modulus at 1 Hz and 0°C (G'₀) [× 10⁶ Pa] | 14 | | | 2.5 | | |
| Dynamic shear storage modulus at 1 Hz and 50°C (G'₅₀) [× 10⁶ Pa] | 0.27 | | | 0.46 | | |
| G'₀/G'₅₀ | 51.9 | | | 5.4 | | |
| Pressure-sensitive adhesive sheet placement in sealing member | Both surfaces | Both surfaces | One surface | Both surfaces | Both surfaces | One surface |
| Foam type in sealing member | Closed-cell foam | Open-cell foam | Open-cell foam | Closed-cell foam | Open-cell foam | Open-cell foam |
| Rough-surface adhesion test results for sealing member | Good | Good | Good | Good | Good | Good |
| High-speed peel test results for sealing member | Good | Good | Good | Good | Good | Good |
| IPX7 test | Good | Good | Good | Good | Good | Good |

**[Table 1C]**

| | Example 6 | Example 7 | Example 8 | | |
|---|---|---|---|---|---|
| Styrene unit content in styrene-based elastomer [mass%] | 18 | 23 | 24.3 | | |
| Content ratio of tackifier to elastomer on mass basis | 0.8 | 0.8 | 0.8 | | |
| Dynamic shear storage modulus at 1 Hz and 0°C (G'₀) [× 10⁶ Pa] | 3.5 | 11 | 16 | | |
| Dynamic shear storage modulus at 1 Hz and 50°C (G'₅₀) [× 10⁶ Pa] | 0.39 | 0.33 | 0.31 | | |
| G'₀/G'₅₀ | 9 | 34 | 52 | | |
| Pressure-sensitive adhesive sheet placement in sealing member | Both surfaces | Both surfaces | Both surfaces | Both surfaces | One surface |
| Foam type in sealing member | Closed-cell foam | Closed-cell foam | Closed-cell foam | Open-cell foam | Open-cell foam |
| Rough-surface adhesion test results for sealing member | Good | Good | Good | Good | Good |
| High-speed peel test results for sealing member | Good | Good | Good | Good | Good |
| IPX7 test | Good | Good | Good | Good | Good |
| Initial sample adhesion (F2) [N/15 mm] | 6.2 | 6.8 | 7.5 | 6.1 | 6.1 |
| Storage-treated sample adhesion (F1) [N/15 mm] | 5.7 | 5.9 | 6.1 | 4.2 | 4.2 |
| Ratio of storage-treated sample adhesion to initial sample adhesion (F1/F2) | 0.92 | 0.87 | 0.81 | 0.69 | 0.69 |

**[Table 1D]**

| | Example 9 | | | Example 10 | | |
|---|---|---|---|---|---|---|
| Styrene unit content in styrene-based elastomer [mass%] | 25.5 | | | 26.8 | | |
| Content ratio of tackifier to elastomer on mass basis | 0.8 | | | 0.8 | | |
| Dynamic shear storage modulus at 1 Hz and 0°C (G'₀) [× 10⁶ Pa] | 38 | | | 22 | | |
| Dynamic shear storage modulus at 1 Hz and 50°C (G'₅₀) [× 10⁶ Pa] | 0.34 | | | 0.36 | | |
| G'₀/G'₅₀ | 112 | | | 59 | | |
| Pressure-sensitive adhesive sheet placement in sealing member | Both surfaces | Both surfaces | One surface | Both surfaces | Both surfaces | One surface |
| Foam type in sealing member | Closed-cell foam | Open-cell foam | Open-cell foam | Closed-cell foam | Open-cell foam | Open-cell foam |
| Rough-surface adhesion test results for sealing member | Good | Good | Good | Good | Good | Good |
| High-speed peel test results for sealing member | Good | Good | Good | Good | Good | Good |
| IPX7 test | Good | Good | Good | Good | Good | Good |
| Initial sample adhesion (F2) [N/15 mm] | 7.9 | 6.8 | 6.8 | 7.9 | 6.4 | 6.4 |
| Storage-treated sample adhesion (F1) [N/15 mm] | 7.3 | 5.1 | 5.1 | 6.8 | 4.5 | 4.5 |
| Ratio of storage-treated sample adhesion to initial sample adhesion (F1/F2) | 0.92 | 0.75 | 0.75 | 0.86 | 0.70 | 0.70 |

**[Table 2]**

| | Comparative Example 1 | Comparative Example 2 | Comparative Example 3 | Comparative Example 4 |
|---|---|---|---|---|
| Styrene unit content in styrene-based elastomer [mass%] | 40 | 30 | 30 | 13 |
| Content ratio of tackifier to elastomer on mass basis | 0.35 | 1.2 | 0.4 | 0.6 |
| Dynamic shear storage modulus at 1 Hz and 0°C G'₀ [× 10⁶ Pa] | 2.3 | 0.95 | 20 | 0.98 |
| Dynamic shear storage modulus at 1 Hz and 50°C (G'₅₀) [× 10⁶ Pa] | 1.1 | 0.35 | 5.1 | 0.47 |
| G'₀/G'₅₀ | 2.1 | 2.7 | 3.9 | 2.1 |
| Pressure-sensitive adhesive sheet placement in sealing member | Both surfaces | Both surfaces | Both surfaces | Both surfaces |
| Foam type in sealing member | Closed-cell foam | Closed-cell foam | Closed-cell foam | Closed-cell foam |
| Rough-surface adhesion test results for sealing member | Not enough | Good | Not enough | Good |
| High-speed peel test results for sealing member | Good | Not enough | Good | Not enough |

## Claims

1. A pressure-sensitive adhesive sheet, wherein
a first dynamic shear storage modulus (G') is higher than 1.0 × 10⁶ Pa, the first dynamic shear storage modulus (G') being a dynamic shear storage modulus (G') of a material of the pressure-sensitive adhesive sheet at 1 Hz and 0°C, and
a second dynamic shear storage modulus (G') is lower than 1.0 × 10⁶ Pa, the second dynamic shear storage modulus (G') being a dynamic shear storage modulus (G') of the material at 1 Hz and 50°C.

2. The pressure-sensitive adhesive sheet according to claim 1, wherein
a ratio of the first dynamic shear storage modulus (G') to the second dynamic shear storage modulus (G') is 4.0 or more.

3. The pressure-sensitive adhesive sheet according to claim 1, wherein
the material comprises a styrene-based elastomer having 15 to 35% styrene units on a mass basis.

4. The pressure-sensitive adhesive sheet according to claim 1, wherein
the material comprises an elastomer and a tackifier, and
a ratio of a content of the tackifier to a content of the elastomer is 0.5 to 1 on a mass basis.

5. A sealing member comprising:
the pressure-sensitive adhesive sheet according to any one of claims 1 to 4; and
a first layer covered with the pressure-sensitive adhesive sheet.

6. The sealing member according to claim 5, wherein
the first layer is a foam.

7. The sealing member according to claim 5, wherein
the sealing member has a thickness of 1 to 40 mm.

8. A sealing structure comprising:
a first member;
a second member; and
the sealing member according to claim 5, wherein
the sealing member seals a gap between the first member and the second member.

9. The sealing structure according to claim 8, wherein
at least one selected from the group consisting of the first member and the second member has a rough surface in contact with the sealing member, and
an arithmetic mean roughness Rₐ of the rough surface determined in accordance with Japanese Industrial Standards (JIS) B0601:2013 is 0.3 µm or more.
